Europäisches Patentamt

European Patent Office

Office européen des brevets

(19)

(11) **EP 0 719 383 B1**

(12) **EUROPÄISCHE PATENTSCHRIFT**

(45) Veröffentlichungstag und Bekanntmachung des Hinweises auf die Patenterteilung:
**13.05.1998  Patentblatt 1998/20**

(21) Anmeldenummer: **94917547.5**

(22) Anmeldetag: **15.06.1994**

(51) Int Cl.$^6$: **F02D 41/18**

(86) Internationale Anmeldenummer:
**PCT/DE94/00660**

(87) Internationale Veröffentlichungsnummer:
**WO 95/00753 (05.01.1995 Gazette 1995/02)**

(54) **VERFAHREN UND VORRICHTUNG ZUM BERECHNEN DES DURCH EIN VENTIL AN EINEM VERBRENNUNGSMOTOR STRÖMENDEN GASVOLUMENS**

METHOD AND DEVICE FOR DETERMINING THE RATE OF FLOW OF A GAS THROUGH A VALVE IN AN INTERNAL-COMBUSTION ENGINE

PROCEDE ET DISPOSITIF PERMETTANT DE DETERMINER LE VOLUME DE GAZ QUI PASSE PAR LA SOUPAPE D'UN MOTEUR A COMBUSTION

(84) Benannte Vertragsstaaten:
**DE FR IT**

(30) Priorität: **22.06.1993  DE 4320621**

(43) Veröffentlichungstag der Anmeldung:
**03.07.1996  Patentblatt 1996/27**

(73) Patentinhaber: **ROBERT BOSCH GMBH
70442 Stuttgart (DE)**

(72) Erfinder:
 • **WILD, Ernst**
   **D-71739 Oberriexingen (DE)**
 • **RYBARSKI, Mariusz**
   **D-74172 Neckarsulm (DE)**
 • **MEZGER, Werner**
   **D-74246 Eberstadt (DE)**

(56) Entgegenhaltungen:
EP-A- 0 326 065          EP-A- 0 478 120
DE-A- 3 241 783          DE-A- 4 211 851
DE-A- 4 219 015

## Beschreibung

Die Erfindung betrifft ein Verfahren und eine Vorrichtung zum Bestimmen des Gasvolumens, das durch ein Ventil strömt, das mit dem Saugrohr eines Verbrennungsmotors über eine Leitung verbunden ist, abhängig vom Druck p_SAUG im Saugrohr und vom Umgebungsdruck p_AMB. Das betroffene Ventil kann z.B. ein Tankentlüftungsventil, ein Leerlaufsteller oder ein Abgasrückführventil sein. Das Gasvolumen hängt vom Quotienten der genannten Drücke ab:

$$QU0\text{-}p = f(p\text{-}SAUG/p\text{-}AMB) \tag{1}$$

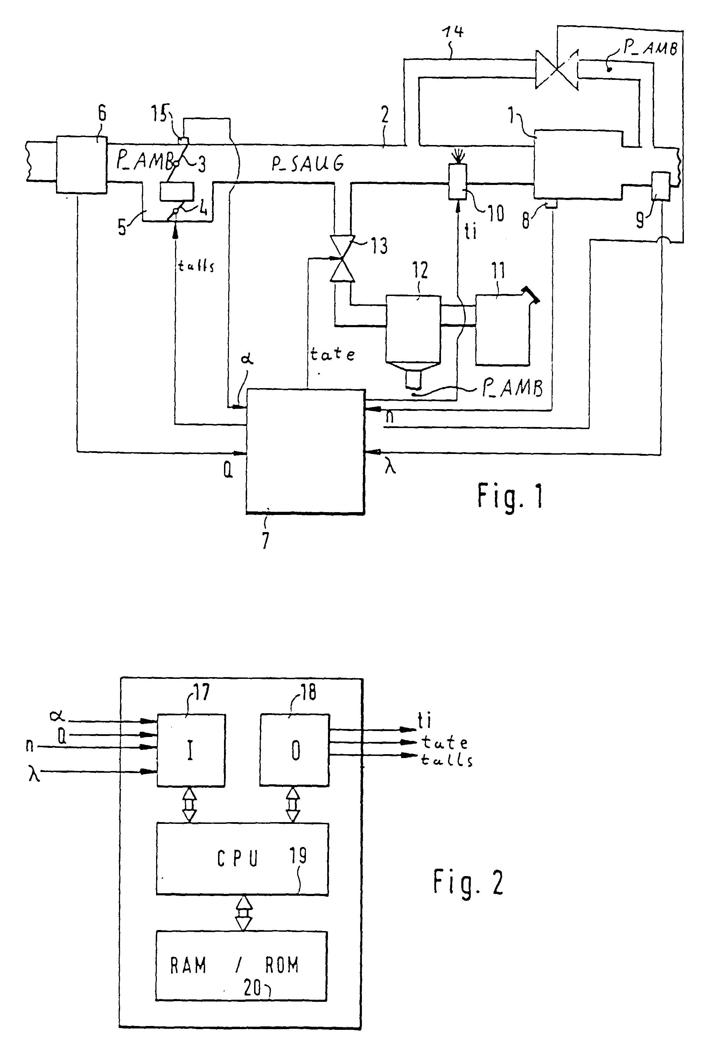

Dieser Parameter spiegelt einen aus der Strömung von Gasen bekannten Zusammenhang wider, daß das durch eine Leitung strömende Gasvolumen eine Funktion des genannten Quotienten ist. Diese Funktion wird Ausflußkennlinie genannt; sie ist in Fig. 2 dargestellt. Bei großen Saugrohrdrücken und damit kleinen Werten des Quotienten sinkt der Druckunterschied zwischen den Enden der Leitung, weswegen auch das das Ventil durchströmende Gasvolumen abnimmt. Bei großem Druckunterschied unterhalb eines Wertes von QUO_p = 0,52 strömt die Luft mit Schallgeschwindigkeit; eine weitere Vergrößerung des Druckunterschiedes bringt keine Erhöhung des Luftdurchsatzes mehr.

Insbesondere beim Betrieb einer Tankentlüftungsanlage bei wechselnden Betriebszuständen ist eine genaue Kenntnis des Durchsatzes durch das Tankentlüftungsventil aus folgendem Grund erwünscht.

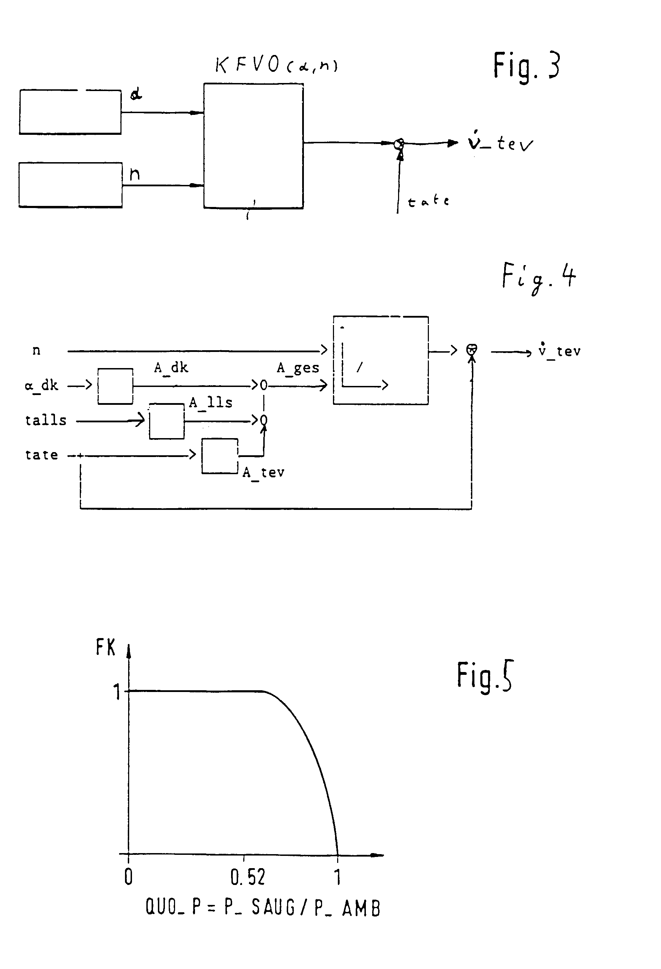

An der Aktivkohlefilterseite des Tankentlüftungsventils herrscht näherungsweise Umgebungsdruck, an der anderen Seite Saugrohrdruck. Beim Erhöhen des Saugrohrdrucks durch Öffnen der Drosselklappe sinkt der Durchfluß durch das Tankentlüftungsventil gemäß der Kennlinie aus Fig. 3 ab oder bleibt bestenfalls gleich. Bei gleichbleibendem Kraftstoffanteil, hervorgerufen durch die Spülung des Aktivkohlefilters mit Frischluft, ändert sich die über die Tankentlüftung in das Saugrohr strömende absolute Kraftstoffmenge entsprechend. Gleichzeitig erhöht sich der Gesamtkraftstoffbedarf der Brennkraftmaschine aufgrund der weiter geöffneten Drosselklappe, so daß sich der relative Anteil des Kraftstoffs aus der Tankentlüftungsanlage am Gesamtkraftstoffbedarf noch stärker verringert als die absolute Menge.

Ohne Gegenmaßnahmen führt diese Veränderung zu einer Abmagerung des Betriebsgemisches der Brennkraftmaschine, die bspw. durch eine weitere Öffnung des Tankentlüftungsventils und/oder durch eine Erhöhung der über Einspritzdüsen fließenden Kraftstoffmenge kompensiert werden muß. Erfolgt die Kompensation über einen Gemischregelkreis, führt diese Fehlanpassung wegen der Totzeiten des Regelkreises zu vorübergehend erhöhten Schadstoffemissionen und u.U. auch zu einer Beeinträchtigung des Fahrverhaltens.

Es ist daher wünschenswert, den Einfluß der Tankentlüftung auf die Gesamtkraftstoffbilanz in jedem Betriebspunkt zu kennen, um entsprechende Gegenmaßnahmen ohne Verzögerung ergreifen zu können. Wie bereits erwähnt, hängt dieser Einfluß entscheidend von der Kennlinie nach Fig. 2 ab, die in ähnlicher Form auch für die Verhältnisse an einem Leerlaufsteller, an einem Abgasrückführventil oder an der Drosselklappe gelten.

## Stand der Technik

Bei Verbrennungsmotoren, die über einen Saugrohrdruck-Messer und einen Umgebungsdruck.Messer verfügen, stellt es keinerlei Problem dar, den Quotienten QUO_p direkt aus den gemessenen Drücken zu bestimmen. Kein allzu großes Problem ergibt sich auch dann, wenn ein Luftmassenmesser und ein Umgebungdruckmesser vorhanden sind. Es ist wohl bekannt, daß sich der Saugrohrdruck aus dem Luftmassenfluß berechnen läßt.

$$p\_SAUG = f(L\_LM) \text{ mit } L\_LM = \text{Luftmassenfluß/Drehzahl}$$

Fast an allen derzeitigen Verbrennungsmotoren fehlt jedoch ein Umgebungsdruck-Messer. In Ermangelung eines solchen wird der Umgebungsdruck mit einem mittleren Wert fest vorgegeben, um den Durchfluß aus der Kennlinie zu bestimmen. Insbesondere bei schwankendem Umgebungsdruck, bspw. bei Fahrten im Gebirge, führt diese Vorgehensweise zu Fehlanpassungen in der Gemischbildung.

Aus der EP-A- 478120 ist es bekannt, den Umgebungsdruck BP aus einem Vergleich von gemessenem und modelhaftgebildetem Ansaugluftstrom zu bilden. Im Zuge der Modellbildung wird dabei abhängig von Drosselklappenstellung $\alpha$ und der Drehzahl n der Ansaugluftstrom mit und ohne Einfluß eines Abgasstroms durch ein Abgasrückführventil berechnet.

## Darstellung der Erfindung

Der Erfindung liegt die Aufgabe zugrunde, ein Verfahren und eine Vorrichtung anzugeben, mit denen es ohne Kenntnis des Umgebungsdrucks, vielmehr nur unter Verwendung von Größen, wie sie beim Betreiben eines Verbrennungsmotors erfaßt werden, möglich ist, den Durchfluß durch ein Ventil in jeder Höhe zu berechnen.

Die Erfindung ist für das Verfahren durch die Merkmale von Anspruch 1 und für die Vorrichtung durch die Merkmale von Anspruch 3 gegeben.

Es hat sich herausgestellt, daß sich der Quotient QUO_p abhängig zu einem Drosselklappenwinkel $\alpha$ ändert, wie er beim Betreiben fast aller Verbrennungsmotoren erfaßt wird. Aus diesem Drosselklappenwinkel $\alpha$ wird ein Drosselklappen-Lastsignal $L\_DK = f(\alpha,n)$ berechnet, wobei n die Drehzahl ist. Im einfachsten Fall wird der Parameter QU0_p einfach als $K'*L\_DK$ berechnet, wobei K' eine Konstante ist. In dieses Lastsignal kann auch der Öffnungsquerschnitt eines Leerlaufstellers einbezogen sein, der in einer Bypassleitung um die Drosselklappe sitzt; dadurch wird die Genauigkeit des Lastsignals erhöht. Dient der Parameter lediglich zum Adressieren einer Kennlinie gemäß Fig. 3, wird die Konstante zweckmäßigerweise zu 1 gewählt, d.h. die Kennlinie wird direkt über Werte des Drosselklappen-Lastsignals adressiert.

Zeichnung

Fig. 1 zeigt das technische Umfeld, in dem die Erfindung zur Anwendung kommt, insbesondere einen Verbrennungsmotor, der mit einer Tankentlüftung, verschiedenen Stellgliedern und Sensoren sowie mit einem Steuergerät ausgerüstet ist.

Fig. 2 verdeutlicht die Funktionsweise des Steuergeräts aus Fig. 1.

Fig. 3: Blockfunktionsdiagrammm eines ersten Ausführungsbeispiels der Erfindung.

Fig. 4 Blockfunktionsdiagramm eines zweiten Ausführungsbeispiel der Erfindung.

Fig. 5: Bekanntes Diagramm betreffend den Zusammenhang zwischen dem Parameter QU0_p und dem durch ein Tankentlüftungsventil strömenden Gasvolumen (als Korrekturfaktor FK normiert auf den größten Volumenstrom). Im Rahmen eines Beispiels wird die Kennlinie nach Fig. 5 zur Durchflußbestimmung genutzt, wobei die Eingangsgröße QU0_p der Kennlinie auf die Meßgrößen Drosselklappenwinkel $\alpha$ und Drehzahl n zurückgeführt sind. Die damit letztlich bestehende Abhängigkeit der Durchflußmenge von $\alpha$ und n kann alternativ dazu in einem $(\alpha,n)$-Kennfeld abgelegt sein.

Beschreibung von Ausführungsbeispielen

Die Fig. 1 zeigt eine Brennkraftmaschine 1, die aus einem Ansaugrohr 2 mit Kraftstoff/Luft-Gemisch versorgt wird. Die Menge Q der angesaugten Luft wird durch den wirksamen Öffnungsquerschnitt des Saugrohrs, bspw. definiert durch einen Auslenkungswinkel $\alpha$ einer Drosselklappe, und durch den wirksamen Öffnungsquerschnitt eines Leerlaufstellgliedes 4 in einem Bypass 5 an den Bedarf der Brennkraftmaschine angepaßt und durch ein Mittel 6 zur Luftmengenmessung erfaßt. Der Winkel $\alpha$ wird vom einem Mittel 15 erfaßt. Ein Steuergerät 7 bildet aus dem Signal Q, dem Signal n eines Drehzahlmessers 8 und dem Signal $\lambda$ einer Abgassonde 9 ein Kraftstoffzumeßsignal ti zur Ansteuerung eines Kraftstoffzumeßmittels 10. Die in einem Vorratstank 11 verdunstenden Kraftstoffdämpfe werden von einem Aktivkohlefilter 12 aufgenommen und über ein Tankentlüftungsventil 13 an das Ansaugrohr weitergeleitet. Der wirksame Öffnungsquerschnitt des Tankentlüftungsventils wird vom Steuergerät mit einem Tastverhältnis tate bestimmt, der des Leerlaufstellers mit einem Tastverhältnis talls. Ein weiterer Gasstrom kann über ein Abgasrückführventil 14 in das Saugrohr gelangen.

Der Aufbau eines zur Durchführung des erfindungsgemäßen Verfahrens geeigneten Steuergeräts ist in der Fig 2 dargestellt. Zwischen einer Eingabeeinheit 17 und einer Ausgabeeinheit 18 vermittelt eine Recheneinheit 19 nach Maßgabe von in einem Speicher 20 abgelegten Programmen und Daten.

Wie weiter oben erläutert, besteht bei dem Auswerten von Gleichung (1) das Problem, daß der Umgebungsdruck p_AMB in der Regel nicht bekannt ist. Der Erfindung liegen die folgenden Überlegungen zur Beseitigung dieses Mangels zugrunde.

Für den über die Drosselklappe fließenden Volumenstrom $\dot{v}\_dk$ gilt ebenfalls die Ausflußkennlinie.

$$\dot{v}\_dk = A\_dk*f(QU0\_p),$$

wobei A_dk den mit dem Drosselklappenwinkel $\alpha$ variierenden wirksamen Durchflußquerschnitt des Saugrohrs darstellt. Für den Volumenstrom durch das Tankentlüftungsventil (tev) gilt:

$$\dot{v}\_tev = A0\_tev*f(QU0\_p)$$

Der Quotient aus beiden Gleichungen liefert:

$$\dot{v}\_tev = (A0\_tev/A\_dk)*\dot{v}\_dk$$

Durch diese Rechenoperation kürzt sich die Ausflußkennlinie heraus. Es bleiben bekannte Abhängigkeiten, denn A_dk ist nur eine Funktion von a. Die angegebene Gleichung für $\dot{v}$_tev gilt für ein vollständig geöffnetes Tankentlüftungsventil mit wirksamen Querschnitt A0. Andere Öffnungsgrade eines mit einem variablen Tastverhältnis ansteuerbaren Ventils ergeben sich daraus durch Multiplikation mit einem Faktor tate, der Werte zwischen 0 und 1, entsprechend einem Tastverhältnis zwischen 0% und 100% annehmen kann.

$$A\_tev = tate*A0\_tev,$$

$$\dot{v}\_tev = tate*(A0\_tev/A\_dk)*\dot{v}\_dk \text{ mit } \dot{v}\_dk = f(\alpha,n)$$

Mit dieser Gleichung kann der Volumenstrom $\dot{v}$_tev durch das Tankentlüftungsventil bei bekanntem Tastverhältnis tate berechnet werden. Der Ausdruck rechts von tate kann in einem Kennfeld KFVO zusammengefaßt und bei der Abstimmung auf einen speziellen Verbrennungsmotor herausgefahren werden.

$$\dot{v}\_tev = tate*KFVO(\alpha,n)$$

Dies ist die erste Genauigkeitsstufe für die Berechnung des Volumenstroms durch das Tankentlüftungsventil (Fig. 3). Die obige Herleitung ist nur solange genau genug, wie die zusätzlichen Volumenströme neben dem Volumenstrom über die Drosselklappe klein genug sind und den Saugrohrdruck nur unwesentlich anheben.

Eine exakte Berechnung des Volumenstroms zum Motor muß alle Zuflüsse zum Saugrohr einbeziehen. Dazu gehören u.a. der Volumenstrom über den Leerlaufsteller (lls) und über das AGR-Ventil (agr). Die nachfolgende Rechnung soll ohne AGR-Ventil durchgeführt werden.

Für den gesamten Volumenstrom $\dot{v}$_ges gilt:

$\dot{v}$_ges = A_ges*f(QU0_p) mit A_ges = A_dk+A_lls+A_tev, wobei A_lls den wirksamen Leerlaufsteller-Querschnitt bezeichnet, der sich analog zum Querschnitt des Tankentlüftungsventils zu A_lls = A0_lls*talls berechnet. Dabei bezeichnet talls das Ansteuersignal für den Leerlaufsteller.

Der Quotient aus $\dot{v}$_tev und $\dot{v}$_ges liefert:

$$\dot{v}\_tev\_= (A\_tev/A\_ges)*\dot{v}\_ges$$

Zur Berechnung des Volumenstroms durch das Tankentlüftungsventil kann nun in zwei Schritten vorgegangen werden. Zuerst wird die gesamte wirksame Querschnittsfläche für den Volumenstrom zum Saugrohr bestimmt. Diesem Gesamtquerschnitt und der zugehörigen Drehzahl n ist über ein (A_ges,n)-Kennfeld, das bei der Abstimmung auf einen speziellen Brennkraftmaschinentyp herausgefahren wurde, ein Gesamtvolumenstrom $\dot{v}$_ges zugeordnet. Anschließend kann nach obiger Gleichung $\dot{v}$_tev bestimmt werden. Dies ist die zweite Genauigkeitsstufe zur Volumenstromberechnung. (Fig. 4).

## Patentansprüche

1. Verfahren zum Bestimmen des Gasvolumens, das durch ein mit dem Saugrohr eines Verbrennungsmotors über eine Leitung verbundenes Ventil strömt, wobei dieses Gasvolumen abhängig ist vom Druck p_SAUG im Saugrohr und vom Umgebungsdruck p_AMB dadurch gekennzeichnet, daß ohne Benutzung des Umgebungsdrucks p_AMB wie folgt vorgegangen wird:

   - Es wird der Drosselklappenwinkel $\alpha$ und die Drehzahl N erfaßt und
   - der Gasvolumenstrom wird abhängig vom Drosselklappenwinkel $\alpha$ und der Drehzahl n bestimmt.

2. Verfahren nach Anspruch 1, dadurch gekennzeichnet, daß als Zwischenschritt ein Parameter QU0b = f($\alpha$,n) als Maß für den Quotienten p_SAUG/p_AMB berechnet wird.

3. Vorrichtung zum Berechnen des Gasvolumens, das durch ein mit dem Saugrohr eines Verbrennungsmotors über eine Leitung verbundenes Ventil strömt, wobei dieses Gasvolumen vom Druck p_SAUG im Saugrohr und vom Umgebungsdruck p_AMB mitbestimmt wird, gekennzeichnet durch

- eine Einrichtung (15) zum Erfassen des Drosselklappenwinkels $\alpha$, eine Vorrichtung (8) zum Erfassen der Drehzahl n und
- eine Einrichtung (7) zum Bestimmen des Gasvolumens als Funktion des Drosselklappenwinkels $\alpha$ und der Drehzahl n.

4. Verfahren nach Anspruch 1 oder 2, dadurch gekennzeichnet, daß bei der Bestimmung des Gasvolumens der Öffnungsquerschnitt eines Leerlaufstellers eingerechnet ist, der in einer Bypassleitung um die Drosselklappe liegt.

## Claims

1. Method for determining the gas volume flowing through a valve connected via a conduit to the intake pipe of an internal combustion engine, this gas volume being dependent on the pressure p_SAUG in the intake pipe and on the ambient pressure p_AMB, characterized in that without using the ambient pressure p_AMB, the procedure is as follows:

- the throttle-valve angle $\alpha$ and the rotational speed n are recorded and
- the gas volume flow is determined as a function of the throttle-valve angle $\alpha$ and the speed n.

2. Method according to Claim 1, characterized in that, as an intermediate step, a parameter QUOb = f($\alpha$,n) is calculated as a measure of the quotient p_SAUG/p_AMB.

3. Apparatus for calculating the gas volume flowing through a valve connected via a conduit to the intake pipe of an internal combustion engine, this gas volume being determined by the pressure p_SAUG in the intake pipe and by the ambient pressure p_AMB, characterized by

- a device (15) for recording the throttle-valve angle $\alpha$, a device (8) for recording the rotational speed n, and
- a device (7) for determining the gas volume as a function of the throttle-valve angle $\alpha$ and the rotational speed n.

4. Method according to Claims 1 or 2, characterized in that the determination of the gas volume includes the aperture cross-section of an idle-speed regulating element situated in a bypass conduit around the throttle valve.

## Revendications

1. Procédé pour déterminer le volume de gaz traversant une soupape reliée à la tubulure d'aspiration d'un moteur à combustion interne par une conduite, le volume de gaz dépendant de la pression p_SAUG dans la tubulure d'aspiration et de la pression ambiante p_AMB,
caractérisé en ce qu'
on procède comme suit sans utiliser la pression ambiante p_AMB :

- on détecte l'angle ($\alpha$) du volet d'étranglement et la vitesse de rotation (n),
- on définit le débit volumique de gaz en fonction de l'angle ($\alpha$) du volet d'étranglement et de la vitesse de rotation (n).

2. Procédé selon la revendication 1,
caractérisé en ce qu'
on calcule comme étape intermédiaire un paramètre QU0b = f($\alpha$,n) comme mesure du rapport p_SAUG/p_AMB.

3. Dispositif de calcul du volume de gaz traversant une soupape reliée à la tubulure d'aspiration d'un moteur à combustion interne par une conduite,
ce volume de gaz étant défini par la pression p_SAUG dans la tubulure d'aspiration et de la pression ambiante p_AMB,
caractérisé par

- une installation (15) pour détecter l'angle (α) du volet d'étranglement,
- un dispositif (8) pour détecter la vitesse de rotation (n), et
- une installation (7) pour déterminer le volume de gaz en fonction de l'angle (α) du volet d'étranglement et de la vitesse de rotation (n).

4. Procédé selon la revendication 1 ou 2,
   caractérisé en ce que
   pour déterminer le volume de gaz on calcule la section d'ouverture d'un organe de réglage de ralenti situé dans la conduite de dérivation autour du volet d'étranglement.

Fig. 1

Fig. 2

KFVO(α,n)                                    Fig. 3

$\dot{v}\_tev$

tate

Fig. 4

n

α_dk →

A_dk

A_ges

talls →

A_lls

tate →

A_tev

$\dot{v}\_tev$

FK

Fig. 5

1

0        0.52        1

QUO_P = P_SAUG / P_AMB